# EUROPEAN PATENT SPECIFICATION

(11) **EP 4 389 102 B1**
(45) Date of publication and mention of the grant of the patent: **25.11.2026**
(21) Application number: 22215516.0
(22) Date of filing: 21.12.2022
(51) Int. Cl.: A61H 19/00, H04L 67/14, H04W 12/08, A63F 13/235, A63F 13/285, A63F 13/323, A63F 13/327, A63F 13/795

(54) **AN INTERNET-BASED REMOTE INTERACTIVE SYSTEM FOR SEX TOYS**
INTERNETBASIERTES INTERAKTIVES FERNSYSTEM FÜR GESCHLECHTSSPIELZEUGE
SYSTÈME INTERACTIF DISTANT BASÉ SUR INTERNET POUR DES JOUETS SEXUELS

(43) Date of publication of application: 26.06.2024
(73) Proprietor: Hu, Junhao, Shenzhen Guangdong (CN); Liao, Min, Shenzhen Guangdong (CN)
(72) Inventor: Hu, Junhao, Shenzhen Guangdong (CN); Liao, Min, Shenzhen Guangdong (CN)
(74) Representative: Cabinet Chaillot

(56) References cited:
- US-A1- 2010 105 484
- US-A1- 2011 107 239
- US-A1- 2015 057 084
- US-A1- 2022 139 169
- US-A1- 2022 378 648

## Description

### Field of the Invention

This invention relates to the technical field of internet remote control, and more particularly to an internet-based remote interactive system for sex toys.

### Background of the Invention

Generally, information exchange allows a plurality of users in the internet to interact simultaneously. However, this interaction can only be limited to the audio and video interaction, which cannot produce interconnection with items in the real world.

Adult content refers to the entertainment provided to adults. However, if the entertainment is only limited to audios and videos, it will become boring after a long period of time. Therefore, we want to design a system to realize the building of interaction between the users in different positions with sex toys in the real-world to facilitate happiness of different users and attract them.

US 2022/139169 A1 discloses a system and a method for allowing one or more users to interact with models from a distance, for example, by enabling the users to input the models during online video chat sessions, wherein the models can define input parameters and provide at least one interactive interface, receive an interactive result according to the interactive interface to perform predefined acts, via an adult toy, based on the interactive result received. The adult toy can be Wi-Fi or Bluetooth^{™} enabled to receive commands directly from the server via web browser extension, the website hosting an online video chat session, or connect to an application installed on a device operated by the model, wherein the application communicates with the web browser extension to relay commands to the adult toy therefrom. In some embodiments, the interactive interface provides a finger guessing game, a dice game or a lottery game.

### Summary of the Invention

To solve the disadvantages of the prior art, this invention aims to provide an internet-based remote interactive system for sex toys to realize the control over sex toys through the internet, which adds interaction between users and creates a new way of sex interaction experience.

To achieve the above object, the present invention provides a technical solution defined in claim 1 of the present invention. Optional features of the technical solution are defined in claims 2-5 of the present invention.

The technical scheme of the invention is different from the prior art, and the novelty and creativity of the invention is obvious.

### Brief Description of the Drawings

FIG. 1 is the structure diagram of the system with sex toys controlled by the remote control link;
FIG. 2 is the structure diagram of the mutually-controlled interaction system of sex toys between a plurality of users by creating a game room through the APP;
FIG. 3 is the flow diagram of the system with sex toy controlled by the remote control link;
FIG. 4 is the flow diagram of the homeowner in the mutually-controlled interaction system of sex toys between a plurality of users by creating a game room through the APP;
FIG. 5 is the flow diagram of the room teammates in the mutually-controlled interaction system of sex toys between a plurality of users by creating a game room through the APP;
FIG. 6 is the schematic diagram that shows the interaction between objects in the system with sex toys controlled by the remote control link;
FIG. 7 is the schematic diagram that shows the interaction between objects in the mutually-controlled interaction system of sex toys between a plurality of users by creating a game room through the APP.

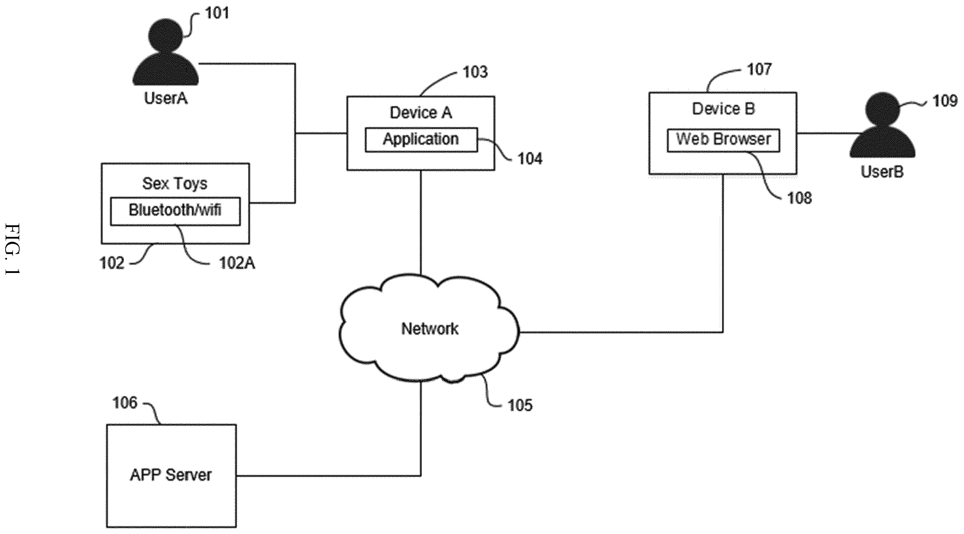

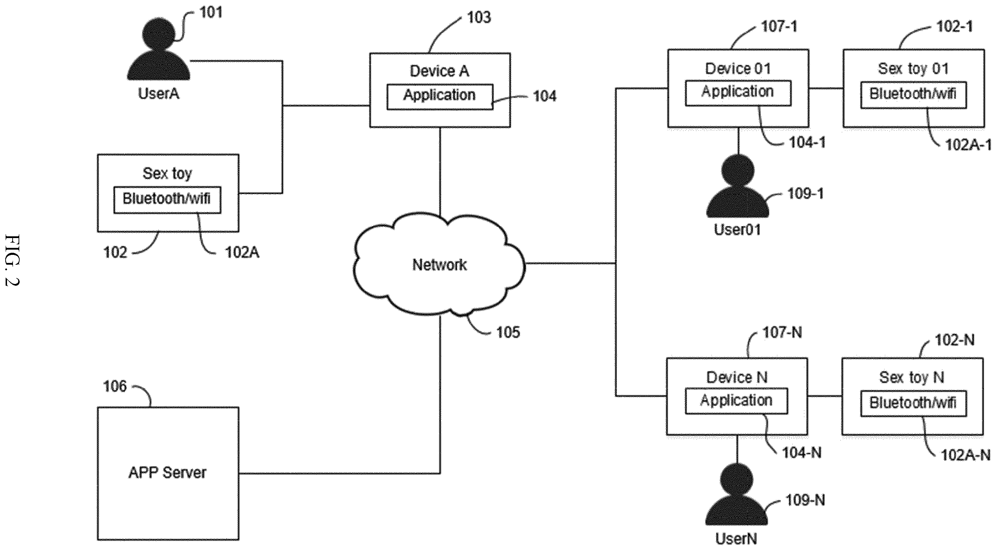

It should be noted that FIG. 1, FIG. 3, and FIG. 6 describe a playing method of sex toys through this system, in which, the user A shares the remote control link to the user B, and the user B sends control commands to the toy of the user A through the virtual control panel generated by the link to control the toy of the user A to produce actions; FIG. 2, FIG. 4, FIG. 5, and FIG. 7 describe another playing method of sex toys through this system, in which, the user creates a game room using the system APP and other users enter the game room for mutual interaction.

### Detailed Description of the Invention

The present disclosure will be explained in details with reference to the accompanying drawings. It should be noted that the embodiments below provide detailed implementation methods and specific operation process based on this technical scheme. However, the protection scope of this invention is not limited to these embodiments.

FIG. 1 shows a technical scheme of the present invention. The system of this inventions comprises: a user A 101, in which, the user A 101 has an operable sex toy 102 that can be configured to receive signals and a wireless mobile device 103 connected to the sex toy in the same internet; the same network refers to Bluetooth/WiFi connection 102A. The wireless mobile device 103 of this invention is provided with an APP 104 for connecting sex toys. This system also comprises a server 106 for storing data of different users and handling different user data requests; a user A 101 that is connected to the internet 105 and then is connected to the server 106 to obtain data through the wireless mobile device 103; a user B 109, in which the user B 109 has a wireless mobile device 107 that can be connected to the server 106 through the internet 105; the user B 109 can send control commands to the server 106 through the control link shared by the user A 101; after receiving the control commands, the sex toy 102 produces the actions corresponding to the control commands, and the action implementing object is the user A 101. It should be note that the user B 109 can run the web browser 108 program in the wireless mobile device 107 to open the control link shared by the user A 101.

FIG. 2 shows another technical scheme of the present invention. It should be noted that in this embodiment, the wireless mobile devices between different users are installed with the APP of this invention system. Specifically, the system of this present invention comprises: a user A 101, in which, the user A 101 has an operable sex toy 102 that can be configured to receive signals and a wireless mobile device A 103 connected to the sex toy in the same internet; the same network refers to Bluetooth/WiFi connection 102A. This system also comprises a server 106 for storing data of different users and handling different user data requests; a user A 101 that is connected to the internet 105 and then is connected to the server 106 to obtain data through the wireless mobile device 103; and users 109-1 to 109N (referring to a plurality of users), in which, the users 109-1 to 109N have wireless mobile devices 104-1 to 104-N (referring to that different users have one set of wireless mobile device) that are connected to the server 106 through the internet 105; at the same time, users 109-1 to 109N have sex toys 102-1 to 102-N (referring to that different users have one set of sex toy that is connected to the wireless mobile device) that are connected to wireless mobile devices 104-1 to 104-N; the user 101 can send control commands to the toy 102 through the APP 104 to control the action of the toy 102, and the action implementing object is the user 101; simultaneously, the APP 104 relays the control commends to the APPs 104-1 to 104-N of the users 109-1 to 109-N through the server 106, and the APPs 104-1 to 104-N send the received control commends to the toys 102-1 to 102-N respectively; after receiving the control commands, the toys 102-1 to 102-N produce the actions corresponding to the control commands, and the implementing objects of the actions are the users 109-1 to 109-N; the user 101 can appoint any user from the users 109-1 to 109-N as a captain, and the user being appointed as the captain can execute the same control operation as the user 101, and the toys of other users including the user 101 will synchronize with the toy of the captain and produce the same action.

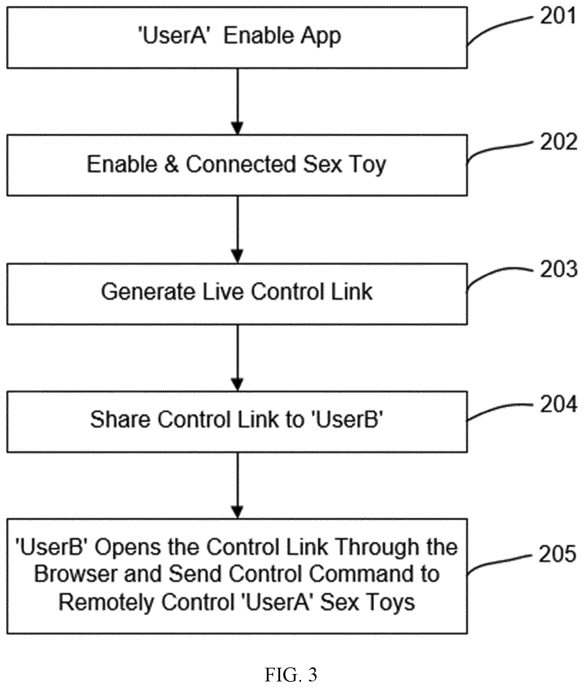

FIG. 3 illustrates the implementation method of one of the technical scheme of the present invention in a simple and direct manner;
S201 The user A enables the APP in the wireless mobile device A that controls the sex toys;
S202 Enable the sex toy and connect the APP to the sex toy in a wireless manner in the same network;
S203 The APP obtains a live remote control link from the server;
S204 Share the user B with the sex toy control link;
S205 The user B receives the sex toy control link from the wireless mobile device B and uses the web browser program to open the sex toy link for the remote control of the sex toy of the user A.

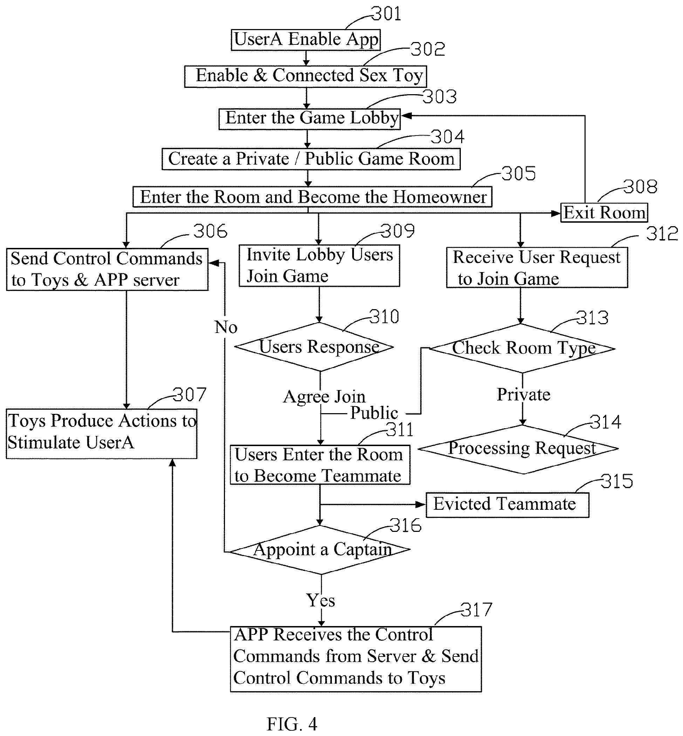

FIG. 4 shows another technical scheme of the present invention, i.e., creating game room mode. Similarly, the system of this present invention comprises: a user A, in which, the user A has an operable sex toy that can be configured to receive signals and a wireless mobile device A connected to the sex toy in the same internet; the same network refers to Bluetooth/WiFi connection. The wireless mobile device A of this invention is provided with an APP for connecting sex toys. The system also comprises a server used for storing data of different users and handling different user data requests; and a user A that is connected to the internet and then is connected to the server to obtain data through the wireless mobile device. Based on this premise, the operation method in game room mode includes the following steps:
S301 The user A enables the APP in the wireless mobile device A that controls the sex toys;
S302 Enable the sex toy and connect the APP to the sex toy in a wireless manner in the same network;
S303 The user A enters the game lobby through the APP;
S304 The user A creates a public game room or a private game room based on the game lobby function;
S305 The user A enters a public game room or a private game room and becomes the homeowner;
S309 The homeowner sends an invitation to any user in the game lobby to enter the game room;
S310 The system identifies the feedback of any invited user. If the invited user agrees to join the game room, then the invited user will enter the game room and become a teammate;
S311 The user successfully enters the game room and becomes the teammate;

It should be noted that the method also includes the following steps:
S312 The homeowner can receive a request to enter the game room from any user;
S313 The system will automatically identify the game room property. If the game room property is public, any user can directly enter the game room and become the teammate;
S314 If the game room property is private, any user needs to obtain the consent from the homeowner to enter the game room and become the teammate;
S306 The homeowner operates the APP virtual control panel mounted on the wireless device and sends control commands to the toy; synchronously, the APP relays the control commands to the APPs of all teammates in the room;
S307 The toy of the homeowner produces the corresponding actions to stimulate the homeowner based on the received control commands.

It should be noted that the method also includes the following steps:
S316 The homeowner appoints any user that has joined the game room as the captain, and the user being appointed as the captain will replace the homeowner and become the controller to obtain the control right over toys;
S317 The APP of the homeowner receives the control commands from the server and relays the control commands to the toy of the homeowner;
S315 The homeowner can evict any user that has entered the game room out of the room;
S308 If the homeowner exits the room and ends the game, the room will be dismissed, and all users in the room will return to the game lobby;

It should be noted that the homeowner can cancel the captain appointment at any time and regain the control right over toys.

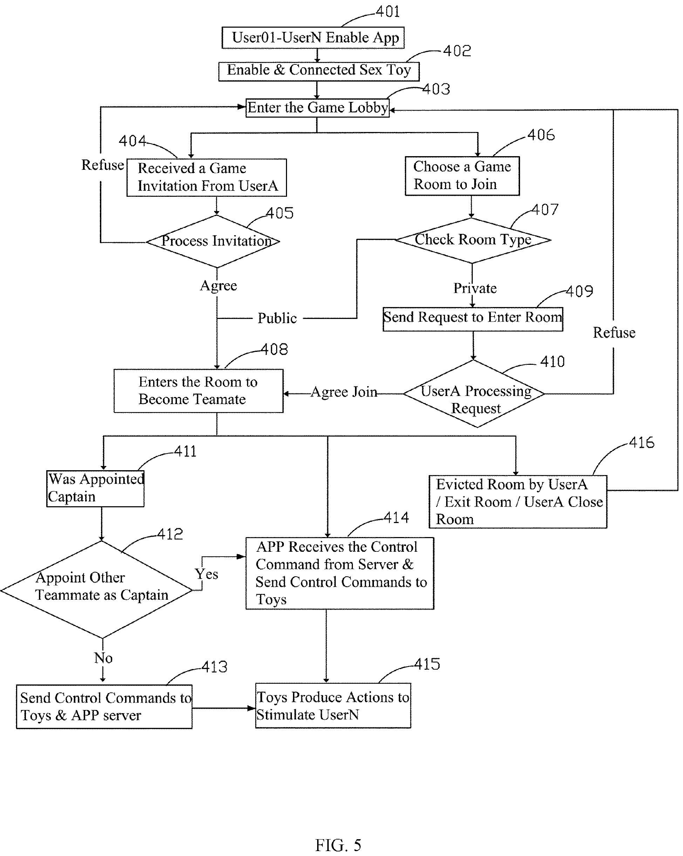

FIG. 5 shows another technical scheme of the present invention, i.e., another mode of the game room. Similarly, the system of this present invention comprises: a plurality of users, in which, a plurality of users have their own operable sex toys that can be configured to receive signals respectively and wireless mobile devices connected to the sex toys in the same internet; the same network refers to Bluetooth/WiFi connection. The wireless mobile device of this invention is provided with an APP for connecting sex toys. The system also comprises a server used for storing data of different users and handling different user data requests; and a plurality of users that are connected to the internet and then are connected to the server to obtain data through the wireless mobile device. Based on this premise, another operation method of the game room includes the following steps:
S401 A plurality of users enable their own APPs in the wireless mobile devices that control the sex toys respectively;
S402 A plurality of users enable their own sex toys and connect the APPs to the sex toys in a wireless manner in the same network respectively;
S403 A plurality of users enter the game lobby through the APPs respectively;
S404 A plurality of users find their own entry invitation to a public game room or a private game room that has been created by the homeowner in the game lobby respectively;
S405 A plurality of users handle their own entry invitations respectively;
S408 After the user agrees to join, the users enter the invited public game room or the private game room;
S411 One of the plurality of users in the game room is appointed as the captain by the homeowner or as a new captain by the existing captain and become the controller to obtain the control right over toys;
S412 The user being appointed as the controller can select to appoint another user as the captain and hand over the control right over toys;
S413 The captain operates the APP virtual control panel mounted on the wireless device and sends the control commands to the toy; synchronously, the APP relays the control commands to the APPs of all teammates except for the captain and of the homeowner in the room;
S414 The APPs of the plurality of users except for the APP of the captain receive control commands from the server and relay the control commands to their toys respectively;
S415 The toys of the plurality of users produce the corresponding actions to stimulate the users based on the received control commands;
S416 The user returns to the game lobby after being evicted out of the game room by the homeowner, or the homeowner closes the game room, or the user exits the game room by its own.

It should be noted that the method also includes the following steps:
S406 The plurality of users can choose to enter the existing public game room or private game room in the game lobby respectively;
S407 After the plurality of users choose the game room, the system will automatically identify the property of selected game room. If the game room property is public, any user can directly enter the game room and become the teammate;
S409 If the game room property is private, the user needs to send a request to enter the game room;
S410 The homeowner handles the request to join sent by the user. If the homeowner agrees the user to join, the user will enter the game room and become a teammate; if the homeowner rejects the user to join, the user can only select another game room in the game lobby.

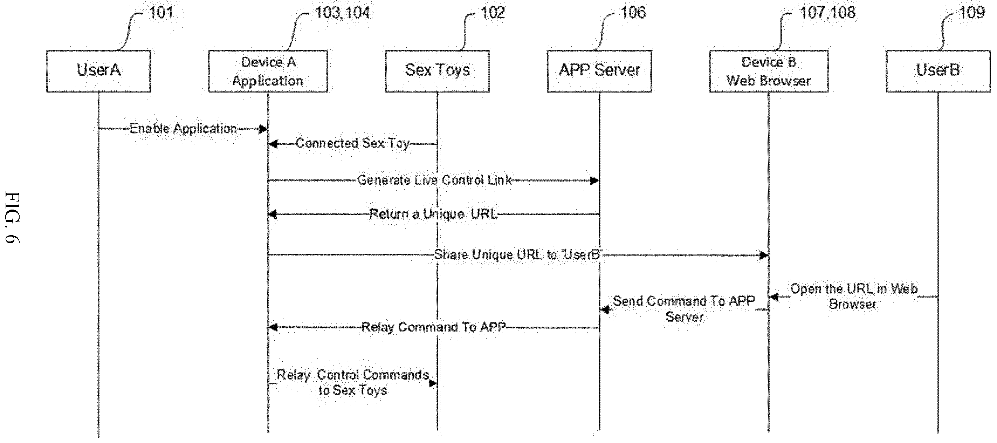

FIG. 6 illustrates the interaction flow between the user A 101, the sex toy, the wireless mobile device and the APP with the user B 109 through this invention;

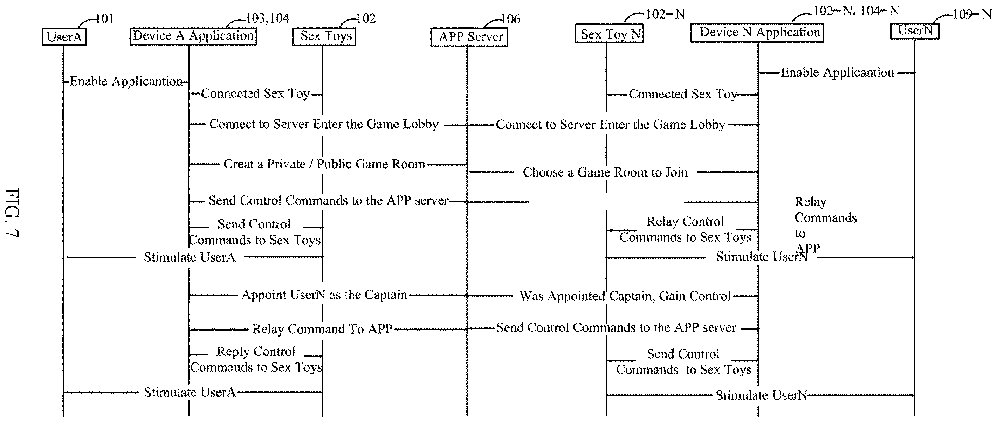

FIG. 7 illustrates the interaction flow between the user 101 and the users 109-N through this invention when a plurality of users have their own sex toys.

It will be understood by those skilled in the art that various changes and modifications may be made according to the above technical scheme and conception, and all these changes and modifications should fall within the scope of protection of the claims of this invention.

## Claims

1. An internet-based remote interactive system for sex toys, wherein, the system comprises different users, sex toys, wireless mobile devices and a server used for storing data of said different users and handling different user data requests; each of said different users has a sex toy, of said sex toys, that is capable of receiving control signals, in which, the sex toy is configured to produce stimulating actions based on the received control signals; each of said different users is provided with a wireless mobile device, of said wireless mobile devices, installed with an APP for sending said control signals and obtaining data from the server, wherein said different users of the system aso comprise a user A, the wireless mobile device of the user A is connected to the sex toy of the user A and also connected to the server through an internet;said different users of the system also comprise N number of other users where N is 2 or more, in which, the wireless mobile device of each of the N number of other users is connected to a respective sex toy of each of the N number of other users, and the wireless mobile device of each of the N number of other users is also connected to the server through the internet; the user A is capable of sending the control signals to the sex toy of said user A through the APP of the wireless mobile device of user A to control the stimulating actions of the sex toy of user A, and so the stimulating actions are performed on said user A; simultaneously, the APP of the wireless mobile device of said user A is configured to relay the control signals to the APPs of the wireless mobile devices of said N number of other users through the server, and the APPs of the wireless mobile devices of said N number of other users are configured to send the received control signals to the sex toys of said N number of other users respectively; after receiving the control signals, the sex toys of said N number of other users are configured to perform stimulating actions corresponding to the control signals onto said N number of other users; the user A is capable of appointing any one of said N number of other users as a captain, and said one of said N number of other users being appointed as the captain is allowed to send out control signals in lieu of said user A such that the sex toys of remaining users of said N number of other users as well as the sex toy of said user A synchronize with the sex toy of the captain to produce the same stimulating actions.

2. The internet-based remote interactive system for sex toys according to Claim 1, wherein: the sex toy of each of said different users is connected to the APP of a respective wireless mobile device through Bluetooth^{®} or WiFi^{®}, the sex toy of each of said different users performs the stimulating actions by receiving the control signals from the APP of the respective wireless mobile device, and the APP sends the control signals to the respective sex toy based on the control signals received from the server.

3. The internet-based remote interactive system for sex toys according to Claim 2, wherein, the APP of the wireless mobile device of each of said different users comprises a game lobby subprogram, in which, the game lobby subprogram allows a respective user to create a game room or enter an existing game room; the user creating the game room is called a homeowner, who is said user A, and other users in the game room are teammates, who are said N number of other users.

4. The internet-based remote interactive system for sex toys according to Claim 3, wherein, the game room is public or private; when the game room is public, any user in a game lobby of the game room is allowed to enter the game room; when the game room is private, if a user in the game lobby wants to enter the game room, the user has to send a request to the homeowner and enters the game room only with a consent of the homeowner; and the homeowner is capable of sending a game invitation to a designated user in the game lobby; after the designated user agrees to join, the designated user will automatically enter the game room created by the homeowner.

5. The internet-based remote interactive system for sex toys according to Claim 4, wherein, the homeowner is capable of cancelling an appointment of the captain or re-appoint another captain at any time; the captain is also capable of handing over control right to another teammate, and the teammate that takes over the right to control will become new captain.

## Patentansprüche

1. - Internetbasiertes interaktives Fernsystem für Sexspielzeuge, wobei das System verschiedene Benutzer, Sexspielzeuge, drahtlose Mobilgeräte und einen Server umfasst, der zum Speichern von Daten der verschiedenen Benutzer und zum Behandeln verschiedener Benutzerdatenanfragen verwendet wird; wobei jeder der verschiedenen Benutzer ein Sexspielzeug der Sexspielzeuge hat, das in der Lage ist, Steuersignale zu empfangen, wobei das Sexspielzeug konfiguriert ist, um basierend auf den empfangenen Steuersignalen Stimulationsaktionen zu erzeugen; wobei jeder der verschiedenen Benutzer mit einem drahtloses Mobilgerät der drahtlosen Mobilgeräte versehen ist, auf dem eine APP zum Senden der Steuersignale und zum Erlangen von Daten von dem Server installiert ist; wobei die verschiedenen Benutzer des Systems auch einen Benutzer A umfassen, das drahtlose Mobilgerät des Benutzers A mit dem Sexspielzeug des Benutzers A verbunden und auch über das Internet mit dem Server verbunden ist; wobei die verschiedenen Benutzer des Systems auch eine Anzahl N anderer Benutzer umfassen, wobei N 2 oder mehr ist, wobei das drahtlose Mobilgerät jedes der Anzahl N anderer Benutzer mit einem jeweiligen Sexspielzeug jedes der Anzahl N anderer Benutzer verbunden ist und das drahtlose Mobilgerät jedes der Anzahl N anderer Benutzer auch über das Internet mit dem Server verbunden ist; wobei der Benutzer A in der Lage ist, über die APP des drahtlosen Mobilgeräts des Benutzers A die Steuersignale an das Sexspielzeug des Benutzers A zu senden, um die Stimulationsaktionen des Sexspielzeugs des Benutzers A zu steuern, sodass die Stimulationsaktionen an dem Benutzer A durchgeführt werden; wobei gleichzeitig die APP des drahtlosen Mobilgeräts des Benutzers A konfiguriert ist, um die Steuersignale über den Server an die APPs der drahtlosen Mobilgeräte der Anzahl N anderer Benutzer weiterzuleiten, und die APPs der drahtlosen Mobilgeräte der Anzahl N anderer Benutzer konfiguriert sind, die empfangenen Steuersignale jeweils an die Sexspielzeuge der Anzahl N anderer Benutzer zu senden; wobei die Sexspielzeuge der Anzahl N anderer Benutzer nach Empfangen der Steuersignale konfiguriert sind, um den Steuersignalen entsprechende Stimulationsaktionen an der Anzahl N anderer Benutzer auszuführen; wobei der Benutzer A in der Lage ist, einen beliebigen der Anzahl N anderer Benutzer zum Kapitän zu ernennen, und wobei jener der Anzahl N anderer Benutzer, der zum Kapitän ernannt wurde, anstelle des Benutzers A Steuersignale aussenden darf, sodass sich die Sexspielzeuge der verbleibenden Benutzer der Anzahl N anderer Benutzer sowie das Sexspielzeug des Benutzers A mit dem Sexspielzeug des Kapitäns synchronisieren, um dieselben Stimulationsaktionen zu erzeugen.

2. - Internetbasiertes interaktives Fernsystem für Sexspielzeuge nach Anspruch 1, wobei das Sexspielzeug jedes der verschiedenen Benutzer über Bluetooth^{®} oder WiFi^{®} mit der APP eines jeweiligen drahtlosen Mobilgeräts verbunden ist, das Sexspielzeug jedes der verschiedenen Benutzer die Stimulationsaktionen durch Empfangen der Steuersignale von der APP des jeweiligen drahtlosen Mobilgeräts durchführt und die APP die Steuersignale basierend auf der von dem Server empfangenen Steuersignale an das jeweilige Sexspielzeug sendet.

3. - Internetbasiertes interaktives Fernsystem für Sexspielzeuge nach Anspruch 2, wobei die APP des drahtlosen Mobilgeräts jedes der verschiedenen Benutzer ein Spielelobby-Unterprogramm umfasst, wobei das Spielelobby-Unterprogramm einem jeweiligen Benutzer ermöglicht, einen Spielraum zu erstellen oder einen bestehenden Spielraum zu betreten; wobei der Benutzer, der den Spielraum erstellt, als Hausbesitzer bezeichnet wird, der der Benutzer A ist, und andere Benutzer in dem Spielraum Teamkollegen sind, die die Anzahl N anderer Benutzer sind.

4. - Internetbasiertes interaktives Fernsystem für Sexspielzeuge nach Anspruch 3, wobei der Spielraum öffentlich oder privat ist; wobei, wenn der Spielraum öffentlich ist, jeder Benutzer in einer Spielelobby des Spielraums den Spielraum betreten darf; wobei, wenn der Spielraum privat ist, ein Benutzer in der Spielelobby, der den Spielraum betreten möchte, eine Anfrage an den Hausbesitzer senden muss und den Spielraum nur mit Zustimmung des Hausbesitzers betritt; und wobei der Hausbesitzer in der Lage ist, einem bestimmten Benutzer in der Spielelobby eine Spieleinladung zu senden; wobei der bestimmte Benutzer nach Zustimmung zum Beitritt automatisch den von dem Hausbesitzer erstellten Spielraum betritt.

5. - Internetbasiertes interaktives Fernsystem für Sexspielzeuge nach Anspruch 4, wobei der Hausbesitzer in der Lage ist, eine Ernennung des Kapitäns aufzuheben oder jederzeit einen anderen Kapitän neu zu ernennen; wobei der Kapitän ferner in der Lage ist, das Steuerungsrecht an einen anderen Teamkollegen zu übergeben, und der Teamkollege, der das Steuerungsrecht übernimmt, der neue Kapitän wird.

## Revendications

1. - Système interactif à distance basé sur Internet pour jouets sexuels, le système comprenant différents utilisateurs, des jouets sexuels, des dispositifs mobiles sans fil et un serveur utilisé pour stocker des données desdits différents utilisateurs et traiter différentes requêtes de données d'utilisateurs ; chacun desdits différents utilisateurs a un jouet sexuel, parmi lesdits jouets sexuels, qui est en mesure de recevoir des signaux de commande, ledit jouet sexuel étant configuré pour produire des actions de stimulation sur la base des signaux de commande reçus ; chacun desdits différents utilisateurs étant équipé d'un dispositif mobile sans fil, parmi lesdits dispositifs mobiles sans fil, sur lequel est installée une application pour envoyer lesdits signaux de commande et obtenir des données à partir serveur, lesdits différents utilisateurs du système comprenant également un utilisateur A, le dispositif mobile sans fil de l'utilisateur A étant connecté au jouet sexuel de l'utilisateur A et étant également connecté au serveur via Internet ; lesdits différents utilisateurs du système comprenant également un nombre N d'autres utilisateurs, où N est égal à 2 ou plus, le dispositif mobile sans fil de chacun du nombre N d'autres utilisateurs étant connecté à un jouet sexuel respectif de chacun du nombre N d'autres utilisateurs, et le dispositif mobile sans fil de chacun du nombre N d'autres utilisateurs étant également connecté au serveur via Internet ; l'utilisateur A étant en mesure d'envoyer des signaux de commande au jouet sexuel dudit utilisateur A via l'application du dispositif mobile sans fil de l'utilisateur A afin de commander les actions de stimulation du jouet sexuel de l'utilisateur A, et ainsi, les actions de stimulation sont effectuées sur ledit utilisateur A ; simultanément, l'application du dispositif mobile sans fil dudit utilisateur A étant configurée pour relayer les signaux de commande vers les applications des dispositifs mobiles sans fil dudit nombre N d'autres utilisateurs via le serveur, et les applications des dispositifs mobiles sans fil dudit nombre N d'autres utilisateurs étant configurées pour envoyer les signaux de commande reçus aux jouets sexuels dudit nombre N d'autres utilisateurs, respectivement ; après réception des signaux de commande, les jouets sexuels dudit nombre N d'autres utilisateurs étant configurés pour effectuer des actions de stimulation correspondant aux signaux de commande sur ledit nombre N d'autres utilisateurs ; l'utilisateur A est en mesure de désigner l'un quelconque dudit nombre N d'autres utilisateurs comme capitaine, et l'un dudit nombre N d'autres utilisateurs désigné comme capitaine étant autorisé à envoyer des signaux de commande à la place dudit utilisateur A, de telle sorte que les jouets sexuels des utilisateurs restants dudit nombre N d'autres utilisateurs ainsi que le jouet sexuel dudit utilisateur A se synchronisent avec le jouet sexuel du capitaine pour produire les mêmes actions de stimulation.

2. - Système interactif à distance basé sur Internet pour jouets sexuels selon la revendication 1, dans lequel : le jouet sexuel de chacun desdits différents utilisateurs est connecté à l'application d'un dispositif mobile sans fil respectif via Bluetooth^{®} ou WiFi^{®}, le jouet sexuel de chacun desdits différents utilisateurs effectue les actions de stimulation par réception des signaux de commande provenant de l'application du dispositif mobile sans fil respectif, et l'application envoie les signaux de commande au jouet sexuel respectif sur la base des signaux de commande reçus en provenance du serveur.

3. - Système interactif à distance via Internet pour jouets sexuels selon la revendication 2, dans lequel l'application du dispositif mobile sans fil de chacun desdits différents utilisateurs comprend un sous-programme de hall de jeu, le sous-programme de hall de jeu permettant à un utilisateur respectif de créer une salle de jeu ou d'entrer dans une salle de jeu existante ; l'utilisateur créant la salle de jeu est appelé propriétaire, qui est ledit utilisateur A, et les autres utilisateurs dans la salle de jeu sont des coéquipiers, qui correspondent audit nombre N d'autres utilisateurs.

4. - Système interactif à distance basé sur Internet pour jouets sexuels selon la revendication 3, dans lequel la salle de jeu est publique ou privée ; lorsque la salle de jeu est publique, tout utilisateur dans un hall de jeu de la salle de jeu est autorisé à entrer dans la salle de jeu ; lorsque la salle de jeu est privée, si un utilisateur dans le hall de jeu souhaite entrer dans la salle de jeu, l'utilisateur doit envoyer une demande au propriétaire et entre dans la salle de jeu uniquement avec le consentement du propriétaire ; et le propriétaire est en mesure d'envoyer une invitation à jouer à un utilisateur désigné dans le hall de jeu ; une fois que l'utilisateur désigné a accepté d'entrer, l'utilisateur désigné entre automatiquement dans la salle de jeu créée par le propriétaire.

5. - Système interactif à distance basé sur Internet pour jouets sexuels selon la revendication 4, dans lequel le propriétaire est en mesure d'annuler la désignation du capitaine ou de redésigner un autre capitaine à tout moment ; le capitaine est également en mesure de céder son droit de commande à un autre coéquipier, et le coéquipier qui prend le droit de commande devient le nouveau capitaine.
